Europäisches Patentamt

European Patent Office

Office européen des brevets

(11) Veröffentlichungsnummer: **0 244 350
B1**

# (12) EUROPÄISCHE PATENTSCHRIFT

(45) Veröffentlichungstag der Patentschrift:
18.07.90

(21) Anmeldenummer: 87810147.6

(22) Anmeldetag: 13.03.87

(51) Int. Cl.⁵: **B62D 25/20**

(54) Chassis für Pritschen- oder Kastenfahrzeuge mit querverlegten Bodenplatten.

(30) Priorität: 27.03.86 CH 1245/86

(43) Veröffentlichungstag der Anmeldung:
04.11.87 Patentblatt 87/45

(45) Bekanntmachung des Hinweises auf die Patenterteilung:
18.07.90 Patentblatt 90/29

(84) Benannte Vertragsstaaten:
AT BE CH DE ES FR GB IT LI NL SE

(56) Entgegenhaltungen:
DE-A- 2 522 477
FR-A- 2 410 592
GB-A- 1 455 564

REVUE DE L'ALUMINIUM, Nr. 510, Oktober 1981,
Seiten 385-388, Paris, FR; "L'aluminium pour le
surfaçage des isolants thermiques"

(73) Patentinhaber: ALUSUISSE-LONZA SERVICES AG,
Feldeggstrasse 4, CH-8034 Zürich(CH)

(72) Erfinder: Utz, Manfred, Pfruendhofstrasse 19,
CH-8910 Affoltern a. A.(CH)

**Beschreibung**

Die Erfindung bezieht sich auf ein Chassis für Pritschen- oder Kastenfahrzeuge der im Oberbegriff des Anspruchs 1 angegebenen Konstruktion.

Seit nunmehr zwanzig Jahren sind Strassenfahrzeuge mit einem Aluminium-Chassis in Gebrauch. Mit einem Aluminium-Chassis wird je nach Anhänger- oder Sattelanhänger-Typ und deren Abmessungen eine Gewichtseinsparung von 200 bis 1000 kg erzielt. Weitere entscheidende Vorteile sind die Korrosionsbeständigkeit, die geringen Unterhaltskosten, die längere Lebensdauer und der kleinere Energieverbrauch.

Dank umfassender Tests mit Chassis-Trägern und verschiedenen Untersuchungen mit Spannungsmessungen an Fahrzeugen auf Prüfstrecken und langjähriger Praxiserprobung ist es heute möglich, für jeden Fahrzeugtyp und für jedes Transportgut das optimale Aluminium-Chassis anzubieten.

Dem Fahrzeughersteller bieten sich für bewährte Chassis-Konstruktionen aus Aluminium u.a. folgende Vorteile an:
- Einbaufertige Längsträger,
- wenig Bauteile, daher einfache Materialbewirtschaftung und niedrige Montagezeiten,
- es ist keine Lackierung erforderlich,
- die Werkstoffe können rezykliert werden.

Auch dem Fahrzeughalter bieten Fahrzeuge mit einem Aluminium-Chassis bedeutende Vorteile:
- Ein geringeres Eigengewicht lässt eine höhere Nutzlast zu, was eine höhere Wirtschaftlichkeit bedeutet,
- bei Leerfahrten oder Teillast ist der Energieverbrauch geringer,
- die hohe Korrosionsbeständigkeit macht eine Lackierung überflüssig, das System ist unterhaltsfreundlich,
- die robuste Bauweise ermöglicht eine lange Lebensdauer und trägt mit dem hohen Schrottwert weiter zur Wirtschaftlichkeit bei.

Für Pritschen- oder Kastenfahrzeuge kann ein Aluminium-Chassis mit quer- oder längsverlegten Aluminiumbodenplanken, hergestellt aus Strangpressprofilen, oder Bodenplatten auf Holzbasis bestückt werden.

Chassis-Typen und Bodenplanken bzw. Bodenplatten sind dem Gesamtgewicht und dem Einsatz entsprechend angepasst und mit einer glatten oder geriffelten Ladefläche versehen. Je nach Einsatz ist der Pritschenboden mit Hubstaplern und Handhubwager befahrbar.

Querverlegte Aluminium-Bodenplanken aus Strangpressprofilen werden mit Klemmstücken an den Längsträgern und den in Längsrichtung des Fahrzeugs verlaufenden Aussenrahmen befestigt. Die Bodenplanken müssen nicht durchlöchert werden.

Querverlegte Bodenplatten dagegen werden in den bekannten Ausführungsformen mittels Schrauben an den Längsträgern und/oder an zwischen den Bodenplatten verlaufenden Querträgern angeschraubt. Bei Bodenplatten, welche massiv ausgebildet sind, ist die Verwendung von Klemmstücken nicht möglich oder unwirtschaftlich.

Eine, dem Oberbegriff von Patentanspruch 1 entsprechende Konstruktion ist aus der DE-A 2 522 477 bekannt. Bei dieser Konstruktion bilden zwei in Abstand übereinander angeordnete Querträger aus gebogenen und geschweissten Profileisen zwischen sich Nuten, in welche die quer verlaufenden Enden der Bodenplatten eingeschoben werden. Die beiden Profileisen werden durch Verschrauben miteinander verbunden, wobei der Abstand der Dicke der Bodenplatte entspricht. Die Nachteile dieser Eisenkonstruktion sind schon oben beschrieben (z.B.: grösseres Gewicht, grösserer Fertigungsaufwand, geringere Korrosionsbeständigkeit und damit Notwendigkeit von Anstrichen, mehr Einzelteile).

Der Erfinder hat sich deshalb die Aufgabe gestellt, ein Chassis für Pritschen- oder Kastenfahrzeuge gemäss dem Oberbegriff von Patentanspruch 1 zu schaffen, das die genannten Nachteile vermeidet und eine einfachere und kostengünstigere, aber dennoch stabile Anordnung der Bodenplatten erlaubt, wobei für die, die Bodenplatten verbindenden Querträger, Aluminiumstrangpressprofile aus einem Stück verwendbar sein sollen.

Die Aufgabe wird durch den Wortlaut von Patentanspruch 1 gelöst.

Weitere vorteilhafte Ausgestaltungen sind in den Unteransprüchen 2 bis 10 dargestellt.

Vorzugsweise bestehen die Querträger, wie auch die Längsträger und der Aussenrahmen, aus Aluminiumstrangpressprofilen.

Die Querträger können beidseits sich über die ganze Länge erstreckende Nuten haben, in welche entsprechend geformte Federn der Bodenplatten, welche in ihrer geometrischen Form den Nuten entsprechen, eingreifen. Als vorteilhaft hat sich erwiesen, pro formschlüssige Verbindungsstelle nur eine Nut bzw. nur eine Feder auszubilden.

Nach einer weiteren Variante der Erfindung kann der aus einem Aluminiumstrangpressprofil ausgebildete Querträger sich beidseits über die ganze Länge der Seitenflächen erstreckende Federn haben. Zum formschlüssien Verbund müssen die Seitenflächen der Bodenplatten entsprechend geformte Nuten haben.

Aus praktischen Gründen sind Nuten bevorzugt, welche sich im Querschnitt nach innen verengen und beispielsweise trapezförmig, halbkreisförmig oder dreieckig sind. Es versteht sich von selbst, dass die einzuführende Feder von entsprechender geometrischer Form sein muss.

In der Praxis hat es sich als zweckmässig erwiesen, die Tiefe der Nuten wenig grösser als die Höhe der entsprechenden Federn auszubilden. Damit wird einerseits die Formschlüssigkeit gewährleistet und andererseits können sich abgestossene bzw. ausgepresste Klebemittel in diesem Zwischenraum sammeln.

Die Bodenplatten können durch Verspannen problemlos ohne jegliche Schrauben od.dgl. an den Querträgern fixiert werden. Die sich vorzugsweise nach innen verengenden Nuten und die entsprechend geformten Federn bewirken beim Spannen, dass kein Spiel entsteht.

Nach einer weiteren Ausführungsform sind die Nuten und Federn durch die Verwendung von bekannten Klebemitteln mit einander verbunden, wobei ein Vorspannen in mehr oder weniger ausgeprägtem Masse erfolgen kann.

Die Erfindung wird in der Zeichnung näher erläutert. Die schematischen Vertikalschnitte zeigen in

- Fig. 1 einen mit einem Längsträger verbundenen Querträger, geschnitten in Querrichtung zum Fahrzeug,
- Fig. 2 einen Schnitt durch A-A von Fig. 1,
- Fig. 3 eine Befestigungsvariante eines Querträgers an einem Längsträger, welche keine Bohrungen im Querträger erforderlich macht,
- Fig. 3a einen Schnitt durch A-A von Fig. 2,
- Fig. 4-7 Varianten von geometrischen Ausführungsformen zur Verbindung eines Querträgers mit einer Bodenplatte, und
- Fig. 8 eine perspektivische Teildarstellung des Chassis mit querverlegten Bodenplatten, von unten.

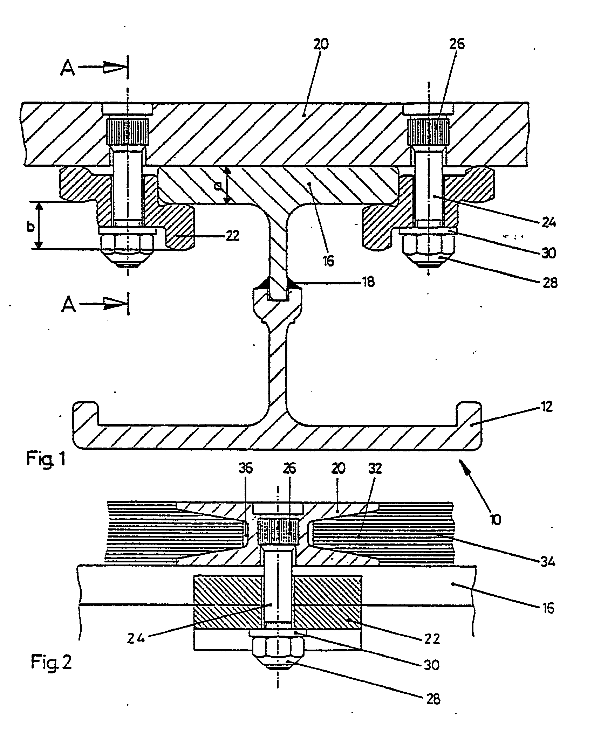

Der in Fig. 1 dargestellte Längsträger 10 umfasst einen Untergurt 12 und einen Obergurt 16. Dieser Längsträger-Obergurt 16 ist mit dem Untergurt 12 mittels Schweissnähten 18 verbunden. So kann die Höhe des Längsträgers 10 variiert und gegebenenfalls der Längsträger-Obergurt 16 ausgewechselt werden. Der Querträger 20 ist mittels zweier Klemmplatten 22 am Längsträger-Obergurt 16 befestigt. Somit kann der Querträger 20 frei entlang des Längsträgers 10 verschoben und befestigt werden. Weiter entfällt bei Verwendung von Klemmplatten die Notwendigkeit, den Obergurt 16 des Längsträgers zu durchbohren.

Eine Radbolzenschraube 24 mit geriffeltem Kopf 26 durchgreift den Querträger 20 und die Klemmplatte 22 und wird durch eine selbstsichernde Mutter 28 mit Unterlagscheibe 30 festgezogen.

Bei der Klemmplatte 22 handelt es sich um eine spezielle Ausführungsform. Im vorliegenden Fall kann sie einen Längsträger-Obergurt der Dicke a optimal befestigen. Wird die Klemmplatte 22 aus der Radbolzenschraube gezogen, um 180° gedreht und wieder eingeführt, so entfaltet sie ihre optimale Wirkung über eine Distanz b. Die Distanz a kann beispielsweise 15 mm, b 20 mm betragen.

Aus Fig. 2 ist ersichtlich, dass der Querträger einen Querschnitt hat, der im Prinzip einem liegenden H ähnlich ist. Die Feder 32, auch Kamm genannt, welche von der Bodenplatte 34 abkragt, verjüngt sich in Form eines im Querschnitt gleichschenkligen Trapezes. Die Bodenplatte passt in die entsprechend ausgebildete seitliche Nut 36 des Querträgers 20. Die Feder 32 der verspannten Bodenplatte 34 reicht jedoch nicht ganz bis zum hintersten Ende der Nut 36, es bleibt noch ein kleiner Raum offen. Dieser dient dazu, beim Einstossen der Bodenplatte 34 nach hinten gedrückten Klebstoff aufzufangen. Zum Kleben, was vorteilhaft angewendet wird, eignen sich alle üblichen Klebstoffe, Seal-Material, elastischer Kitt usw.

Im Querschnitt rechteckige Federn mit parallen Flächen werden in der Praxis wenig bis nie eingesetzt, weil sie einerseits Spiel haben müssen, und andererseits beim Einsetzen der Klebstoff praktisch vollständig abgestreift wird.

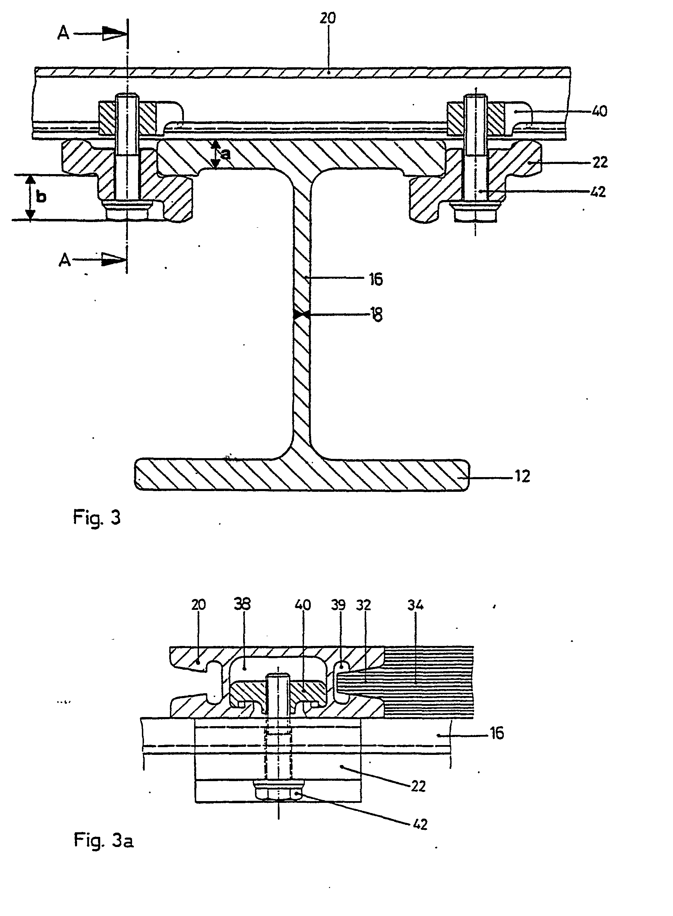

In den Fig. 3 und 3a ist ein Querträger 20 spezieller Bauart mit einer Holzplatte 34 verbunden. In Längsrichtung des Querträgers 20 verläuft eine hinterschnittene Nut 38, in welche ein Nutenstein 40, ein Profilstück aus Aluminium, von unten eingeführt ist. Eine Schraube 42 durchgreift ein Klemmstück 22 und ist in eine Gewindeöffnung des Nutensteins 40 eingeführt. Durch Anziehen der Schraube 42 dreht sich der Nutenstein 40 quer zur Oeffnung 38 und befestigt den Querträger 20 am Längsträger-Obergurt 16. Damit sind beide in der Horizontalebene möglichen Freiheitsgrade gewahrt:
- Die Querträger 20 können durch Verschieben der Klemmplättchen 22 entlang der Längsträger-Obergurten 16 in beliebiger Position fixiert werden.
- Das Verschieben der Nutensteine 40 entlang der Querträger 20 erlaubt, dass die Längsträger 10 einen beliebigen Abstand haben können.

Durch Ausbilden einer Nut 39 kann eine zusätzliche Gewichtsersparnis erzielt werden, was sich auf den Material- und Energieaufwand positiv auswirkt.

Beispielsweise sind die Querträger 90 mm, die Bodenplatten 625-750 mm breit.

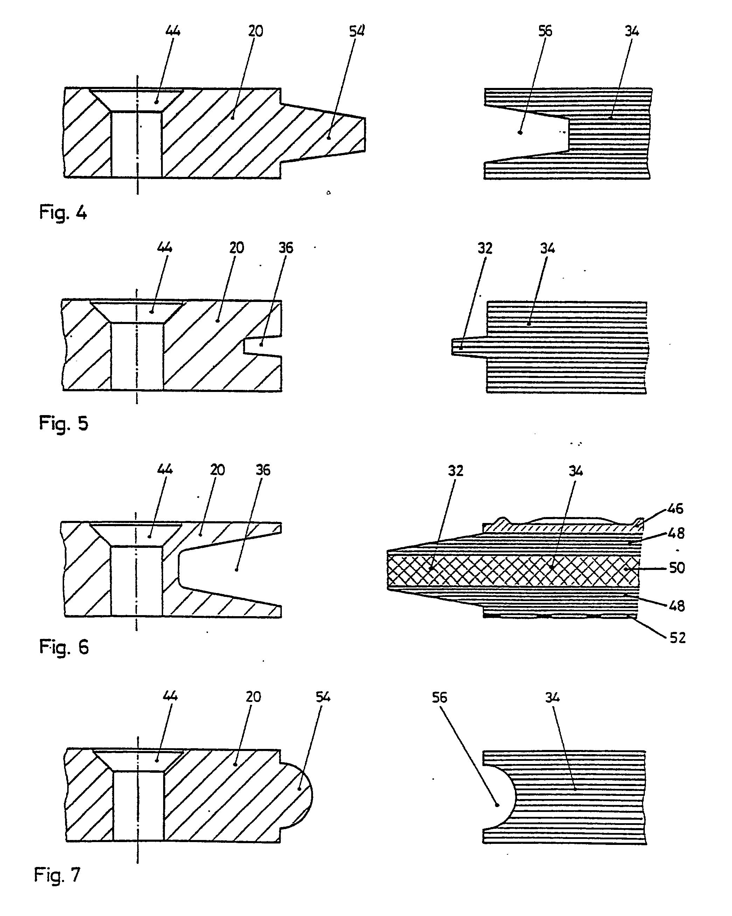

Gemäss Fig. 4 weist der Querträger 20 mit Bohrung 44 eine Feder 54 auf, welche in eine entsprechend angepasste Nut der Bodenplatte 34 geführt wird.

Der in Fig. 5 gezeigte Querträger 20 hat eine Bohrung 44 zur Befestigung am Längsträger. Die Nut 36 im Querträger 20 zur Aufnahme der Feder 32 der Bodenplatte 34 aus Sperrholz ist wesentlich kleiner ausgebildet als beispielsweise diejenigen in Fig. 2. Dennoch verlaufen die Nut 36 und die entsprechende Feder 32 konisch.

Der Querträger von Fig. 6 entspricht, abgesehen von der Grösse der Nut 36 demjenigen von Fig. 5. Einen völlig anders gearteten Aufbau weist dagegen die Bodenplatte 34 aus. Sie besteht aus einem Aluminium-Kunststoff-Aluminium-Verbundwerkstoff. Die Deckschicht 46 besteht aus einem geriffelten Aluminiumblech, dann folgt eine Schicht 48 aus einem steifen Hartschaumstoff, bekannt unter dem Markennamen FOREX der Firma Lonza. Die Kernschicht 50 besteht aus einem grobzelligen Schaumstoff, bekannt unter der Markenbezeichnung AIREX der Firma Lonza. Unterhalb dieser Kernschicht 50 ist wieder eine Schicht 48 aus einem steifen Hartschaumstoff angeordnet. Der Verbundwerkstoff ist unten durch ein Aluminiumblech 52 begrenzt, welches als Diffusions-Sperre und Schutz gegen Steinschlag wirkt.

Der Aluminium-Kunststoff-Aluminium-Verbund wird in der Nut 36 des Querträgers 20 verspannt.

Der in Fig. 7 dargestellte Querträger 20 unterscheidet sich von den vorhergehenden dadurch, dass er im seitlichen Bereich nicht eine Nut, sondern eine Feder 54 ausweist. Die Feder ist im Querschnitt halbkreisförmig, hat also dreidimensional betrachtet die Form eines Halbzylinders. Entsprechend ist in der Bodenplatte 34 eine im Querschnitt halbkreisförmige Nut 56 ausgespart, in welche beim Verspannen die Feder 54 eingeführt wird.

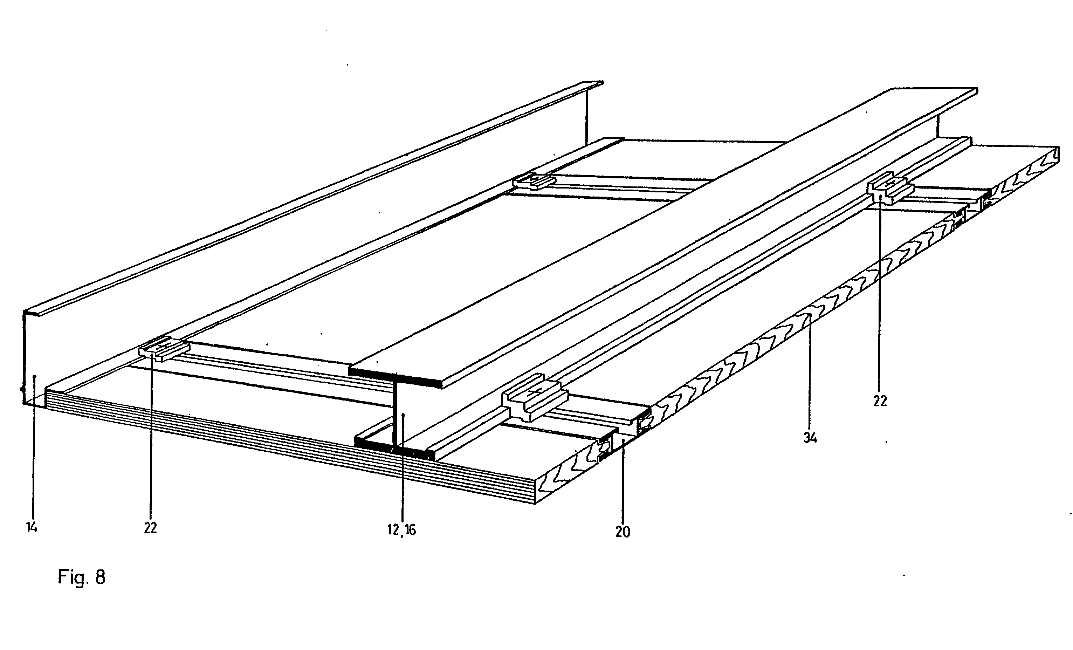

Fig. 8 zeigt in perspektivischer Darstellung einen Längsträger 10 und einen Aussenrahmen 14, auf welchen Querträger 20 und Bodenplatten 34 alternierend befestigt sind.

Aus allen in der Zeichnung dargestellten Ausführungsformen ist ersichtlich, dass die Bodenplatten 34 nirgends verschraubt werden müssen, und dass die Querträger und Bodenplatten exakt gleich hoch sind. Die Breite der Querträger 20 liegt vorzugsweise zwischen 50 und 100 mm, diejenige der Bodenplatten 34 zwischen 500 und 1500 mm.

## Patentansprüche

1. Chassis für Pritschen- oder Kastenfahrzeuge, mit in Querrichtung verlaufenden Bodenplatten (34), welche auf zwei Längsträgern (10) und dem in Längsrichtung des Fahrzeugs verlaufenden Aussenrahmen (14) aufliegen, wobei der Pritschenboden mit den Längsträgern (10) verschraubten Querträgern (20) und gleich hohen, unverschraubten Bodenplatten (34), welche alternierend angeordnet in formschlüssigen Eingriff stehen, besteht, dadurch gekennzeichnet, dass die Querträger (20) aus einem einstückig stranggepressten Aluminiumprofil bestehen, welches beidseits sich seitlich über die ganze Länge erstreckende Nuten (36) bzw. Federn (54) aufweist, in welche entsprechend geformte Federn (32) bzw. Nuten (56) der Bodenplatten (34) formschlüssig eingreifen, und dass die Nuten (36, 56) sich im Querschnitt nach innen verengen.

2. Chassis nach Anspruch 1, dadurch gekennzeichnet, dass die Tiefe der Nuten (36, 56) wenig grösser ist als die Höhe der entsprechenden Federn (32, 54).

3. Chassis nach Anspruch 1 oder 2, dadurch gekennzeichnet, dass die Querträger (20) unten eine Nut (38) aufweisen, die sich über die ganze Länge erstreckt und zur Aufnahme eines Nutensteins (40) dient.

4. Chassis nach einem der Ansprüche 1 bis 3, dadurch gekennzeichnet, dass die Bodenplatten (34) zwischen den Querträgern (20) verspannt sind.

5. Chassis nach einem der Ansprüche 1 bis 4, dadurch gekennzeichnet, dass die Nuten (36, 56) und Federn (32, 54) miteinander verklebt sind.

6. Chassis nach einem der Ansprüche 1 bis 5, dadurch gekennzeichnet, dass die Nuten (36, 56) im Querschnitt trapezförmig, halbkreisförmig oder dreieckig ausgebildet sind.

7. Chassis nach einem der Ansprüche 1 bis 6, dadurch gekennzeichnet, dass die Bodenplatten (34) aus Holz, Sperrholz oder verleimten Spanplatten bestehen.

8. Chassis nach einem der Ansprüche 1 bis 7, dadurch gekennzeichnet, dass die Bodenplatten (24) aus Aluminium-Kunststoff-Aluminium-Verbundwerkstoff besteht.

9. Chassis nach Anspruch 8, dadurch gekennzeichnet, dass der Aluminium-Kunststoff-Aluminium-Verbundwerkstoff aus einem Aluminiumblech als Deckschicht (46), einer anschliessenden Schicht (48) aus einem steifen Hartschaumstoff, einer Kernschicht (50) aus einem grobzelligen Schaumstoff, wiederum einer Schicht (48) aus einem steifen Hartschaumstoff und einem unteren Aluminiumblech (52) besteht.

10. Chassis nach Anspruch 9, dadurch gekennzeichnet, dass das Aluminiumblech der Deckschicht (46) auf seiner freien Oberfläche geriffelt ist.

## Revendications

1. Châssis pour camion du type plateau ou fourgon, comprenant des panneaux de plancher (34) s'étendant dans la direction transversale, qui reposent sur deux longerons (10) et sur le cadre extérieur (14) qui s'étend dans la direction longitudinale du véhicule, le plancher du plateau étant composé de traverses (20) boulonnées aux longerons (10), et de panneaux de plancher (34), de même hauteur, non boulonnés, disposés en alternance, et en prise par sûreté de forme, caractérisé en ce que les traverses (20) sont faites d'un profilé d'aluminium monobloc filé, qui présente sur les deux côtés des rainures (36) ou des languettes (54) s'étendant latéralement sur toute la longueur, et avec lesquelles des languettes (32) ou rainures (56) des panneaux de plancher (34), d'une forme correspondante, sont en prise par sûreté de forme, et en ce que les rainures (36, 56) se rétrécissent vers l'intérieur en section transversale.

2. Châssis selon la revendication 1, caractérisé en ce que la profondeur des rainures (36, 56, est plus petite que la hauteur de saillie des languettes (32, 54) correspondantes.

3. Châssis selon la revendication 1 ou 2, caractérisé en ce que les traverses (20) présentent en position inférieure une rainure (38) qui s'étend sut toute la longueur et qui sert à recevoir un écrou de rainure (40).

4. Châssis selon une des revendications 1 à 3, caractérisé en ce que les panneaux de plancher (34) sont serrés entre les traverses (20).

5. Châssis selon une des revendications 1 à 4, caractérisé en ce que les rainures (36, 56) et languettes (32, 54) sont collées les unes aux autres.

6. Châssis selon une des revendications 1 à 5, caractérisé en ce que les rainures (36, 56) sont en section transversale en forme de trapèze, de demi-cercle ou de triangle.

7. Châssis selon une des revendications 1 à 6, caractérisé en ce que les panneaux de plancher (34) sont faits de bois, de bois contre-plaqué ou de panneaux de particules encollés.

8. Châssis selon une des revendications 1 à 7, caractérisé en ce que les panneaux de plancher (24) sont composés d'un matériau composite aluminium-matière plastique-aluminium.

9. Châssis selon la revendication 8, caractérisé en ce que le matériau composite aluminium-matière plastique-aluminium est composé d'une tôle d'aluminium formant couche de revêtement (46), d'une couche suivante (48) faite d'une mousse dure rigide, d'une couche d'âme (50) faite de mousse à grands alvéoles, à nouveau d'une couche (48) en mousse dure rigide et d'une tôle d'aluminium inférieure.

10. Châssis selon la revendication 9, caractérisé en ce que la tôle d'aluminum de la couche de revêtement (46) est striée sur sa surface libre.

## Claims

1. Frame for platform or box-type vehicles comprising floor boards (34) which run in the transverse direction and rest on two longitudinal members (10) and the outer border (14) running in the longitudinal direction of the vehicle, the platform board consisting of cross members (20) bolted to the longitudinal members (10), and unbolted floor boards (34) which are of the same height and are arranged alternately in positive-locking engagement, characterized in that the cross members (20) consist of an aluminium section which is extruded in one piece and, on either side, has grooves (36) or tongues (54) which extend laterally over the entire length and into which correspondingly shaped tongues (32) or grooves (56) of the floor boards (34) engage in a positive-locking manner, and in that the grooves (36, 56) narrow in cross section to the inside.

2. Frame according to Claim 1, characterized in that the depth of the grooves (36, 56) is slightly larger than the height of the corresponding tongues (32, 54).

3. Frame according to Claim 1 or 2, characterized in that the cross members (20) have, at the bottom, a groove (38) which extends over the entire length and serves to accommodate a groove block (40).

4. Frame according to any of Claims 1 to 3, characterized in that the floor boards (34) are restrained between the cross members (20).

5. Frame according to any of Claims 1 to 4, characterized in that the grooves (36, 56) and tongues (32, 54) are adhesively bonded to one another.

6. Frame according to any of Claims 1 to 5, characterized in that the grooves (36, 56) are of trapezoidal, semicircular or triangular design in cross section.

7. Frame according to any of Claims 1 to 6, characterized in that the floor boards (34) are made of wood, plywood or glued particle boards.

8. Frame according to any of Claims 1 to 7, characterized in that the floor boards (24) is made of an aluminium-plastic-aluminium composite material.

9. Frame according to Claim 8, characterized in that the aluminium-plastic-aluminium composite material consists of an aluminium sheet as cover layer (46), an adjoining layer (48) of a rigid foamed plastic, a core layer (50) of a coarse-cell foamed plastic, again a layer (48) of a rigid foamed plastic, and a bottom aluminium sheet (52).

10. Frame according to Claim 9, characterized in that the aluminium sheet of the cover layer (46) is corrugated on its free surface.

EP 0 244 350 B1

Fig. 1

Fig. 2

Fig. 3

Fig. 3a

EP 0 244 350 B1

Fig. 4

Fig. 5

Fig. 6

Fig. 7

Fig. 8